# EUROPEAN PATENT APPLICATION

(11) **EP 4 502 649 A1**
(43) Date of publication of application: **05.02.2025**
(21) Application number: 22934687.9
(22) Date of filing: 06.09.2022
(51) Int. Cl.: G01S 7/48, G01S 7/486, G01S 7/4865, G01S 7/4912, G01S 7/4915, G01S 17/894

(54) **DETECTOR CONTROL METHOD AND APPARATUS, AND STORAGE MEDIUM AND LASER RADAR**

(30) Priority: 31.03.2022 CN 202210333763
(71) Applicant: Hesai Technology Co., Ltd., Shanghai 201815 (CN)
(72) Inventor: JIANG, Xiaolong, Shanghai 201815 (CN); XIANG, Shaoqing, Shanghai 201815 (CN)
(74) Representative: Fish & Richardson P.C.
(86) International application number: PCT/CN2022/117236
(87) International publication number: WO 2023/184867

(57) **Abstract**

A detector control method and apparatus, a storage medium, and a LiDAR are disclosed. The detector control method includes: determining a target instruction in an instruction table in response to receiving a trigger signal, where the instruction table includes multiple sequentially arranged instructions, each instruction includes a first instruction portion and a second instruction portion, the first instruction portion indicates at least one operation object, and the second instruction portion indicates multiple sequentially arranged operation steps; determining a target time parameter corresponding to operation steps indicated by the target instruction, where the target time parameter represents each time interval between the operation steps indicated by the target instruction; and controlling at least one operation object to execute the target instruction based on the target time parameter, where the operation object includes a detector. Based on technical solutions of this disclosure, flexibility in detector control can be realized.

## Description

This application claims priority to Chinese Patent Application No. 202210333763.2, filed on March 31, 2022 and entitled "DETECTOR CONTROL METHOD AND APPARATUS, STORAGE MEDIUM, AND LIDAR" to the China National Intellectual Property Administration, the content of which is herein incorporated by reference in its entirety.

### TECHNICAL FIELD

This disclosure relates to the field of LiDAR technologies and, in particular, to a detector control method and apparatus, and a storage medium, and a LiDAR.

### BACKGROUND

With the emergence of unmanned vehicle technologies, LiDAR gets more and more attention as an important detection component. LiDAR is a radar system that emits a laser beam to detect features such as position and speed of a target. A working principle of LiDAR is to emit a detection signal (laser beam) to the target, then compare a received signal (target echo) reflected from the target with an emission signal, perform appropriate processing, and then determine relevant information of the target, such as distance, orientation, altitude, speed, attitude, even shape, or other parameters of the target.

An information pathway through which the LiDAR emits and receives laser once can be called a channel. The LiDAR includes multiple detectors and multiple lasers, and the information pathway through which the LiDAR emits and receives laser once can be called a channel. All channels together form an entire detection field of view ("FOV") of the LiDAR. For a detection end, one channel includes one detector. When the LiDAR works, a receiving end ("RX end") thereof needs to execute multiple operations, for example, applying or removing voltage to the detector, turning on or turning off a time of flight ("TOF") calculation function, selecting a channel, or the like.

Different types of LiDAR vary with implementation sequence and implementation time needs for multiple operations, that is, different types of LiDAR have different operation time sequences, different types of LiDAR need customized chips to match them, and a controller chip of the receiving end can be not universal.

### SUMMARY

A technical problem to be solved in this disclosure is to achieve flexibility in detector control.

To solve the technical problem, in a first aspect, embodiments of this disclosure provide a detector control method, including: determining a target instruction in an instruction table in response to receiving a trigger signal, where the instruction table includes multiple sequentially arranged instructions, each instruction includes a first instruction portion and a second instruction portion, the first instruction portion indicates at least one operation object, and the second instruction portion indicates multiple sequentially arranged operation steps; determining a target time parameter corresponding to operation steps indicated by the target instruction, where the target time parameter represents each time interval between the operation steps indicated by the target instruction; and controlling at least one operation object to execute the target instruction based on the target time parameter, where the operation object includes a detector.

Optionally, the first instruction portion includes a first instruction subportion and a second instruction subportion, the first instruction subportion indicates an identifier of a detector group, and the second instruction subportion indicates an identifier of the detector.

Optionally, the first instruction subportion indicates an identifier of at least one detector group.

Optionally, the number of the first instruction portion is at least one, and each of the first instruction portion indicates one operation object.

Optionally, the number of the second instruction portion is at least on, and a correspondence relationship existing between the at least one first instruction portion and the at least one second instruction portion, and each second instruction portion indicates multiple sequentially arranged operation steps.

Optionally, the determining a target instruction in an instruction table in response to receiving a trigger signal includes: determining, as the target instruction, an instruction indicated by a sequencer at a current position in the instruction table.

Optionally, after controlling the at least one operation object to execute the target instruction based on the target time parameter, the detector control method further includes: controlling the instruction indicated by the sequencer in the instruction table to be a next instruction of the target instruction.

Optionally, before determining the target instruction in the instruction table, the detector control method further includes: determining whether a reset signal is received; and controlling the instruction indicated by the sequencer in the instruction table to be an initial instruction when the reset signal is received, where the initial instruction is a certain instruction in the instruction table.

Optionally, the number of the sequencer is at least one, and initial instructions corresponding to the different sequencers are in different positions in the instruction table.

Optionally, the trigger signal is from at least one receiving port, and the trigger signal from the same receiving port corresponds to at least one of the sequencer.

Optionally, the determining a target instruction in an instruction table in response to receiving the trigger signal includes: in response to the received trigger signals from the different receiving ports, respectively determining multiple target instructions based on the instruction indicated by the sequencer corresponding to the trigger signal of each of the receiving port in the instruction table.

In a second aspect, embodiments of this disclosure further disclose a detector controller apparatus, including: a target instruction determination module for determining a target instruction in an instruction table in response to receiving a trigger signal, where the instruction table includes multiple sequentially arranged instructions, each instruction includes a first instruction portion and a second instruction portion, the first instruction portion indicates at least one operation object, and the second instruction portion indicates multiple sequentially arranged operation steps; a time parameter determination module configured to determine a target time parameter corresponding to operation steps indicated by the target instruction, where the target time parameter represents each time interval between the operation steps indicated by the target instruction; and an executer module configured to control at least one operation object to execute the target instruction based on the target time parameter, where the operation object includes a detector.

Optionally, the target instruction determination module includes: at least one sequencer, where an initial instruction of each sequencer is in a different position in the instruction table.

Optionally, the target instruction determination module includes: at least one receiving port, where the receiving port receives the trigger signal, and the trigger signal from the same receiving port corresponds to at least one of the sequencer.

Optionally, the time parameter determination module includes: at least one timer configured to determine a target time parameter corresponding to operation steps indicated by the target instruction, where the different timers store the different target time parameters.

In a third aspect, embodiments of this disclosure further disclose a computer-readable storage medium, having a computer program stored thereon, where when a process is running the computer program, executes steps of the detector control method based on any one of the above.

In a fourth aspect, embodiments of this disclosure further disclose a LiDAR, including a memory and a processor, where the memory stores a computer program that can be run on the processor, and when the processor is running the computer program, executes steps of the detector control method based on any of the above.

Compared with the existing technique, the technical solutions of the embodiments of this disclosure achieve the following beneficial effects.

In the technical solutions of this disclosure, a controller chip of the LiDAR determines the target instruction in the instruction table in response to receiving the trigger signal, where the instruction table includes multiple sequentially arranged instructions, each instruction includes a first instruction portion and a second instruction portion, the first instruction portion indicates the at least one operation object, and the second instruction portion indicates multiple sequentially arranged operation steps. A target time parameter corresponding to operation steps indicated by the target instruction is determined, where the target time parameter represents each time interval between the operation steps indicated by the target instruction. At least one operation object is controlled to execute the target instruction based on the target time parameter, where the operation object includes a detector. In the technical solutions of this disclosure, because each instruction includes a first instruction portion indicating the operation object and a second instruction portion indicating the operation steps, different detectors can be flexibly indicated to execute different operation steps by setting the instruction in the instruction table to achieve the flexibility in the detector control. Alternatively, selecting different target time parameters can also achieve the flexibility in the detector control, that is, the same chip can be configured with different operation time sequences to expand an application scope of the controller chip of the LiDAR.

Further, the trigger signal is from at least one receiving port, and the trigger signal from the same receiving port corresponds to at least one sequencer. Initial instructions corresponding to the different sequencers are in different positions in the instruction table. In the technical solutions of this disclosure, different detectors can be separately controlled by setting different sequencers to determine different target instructions, further achieving the flexibility in the detector control.

### BRIEF DESCRIPTION OF THE DRAWINGS

Fig. 1 shows a schematic structural diagram of a detector system framework in the existing technique.
Fig. 2 shows a flowchart of a detector control method, provided in embodiments of this disclosure.
Fig. 3 shows a schematic structural diagram of a detector system framework, provided in embodiments of this disclosure.
Fig. 4 shows a schematic diagram of a specific application scenario, provided in embodiments of this disclosure.
Fig. 5 shows a schematic structural diagram of a detector controller apparatus, provided in embodiments of this disclosure.

### DETAILED DESCRIPTION

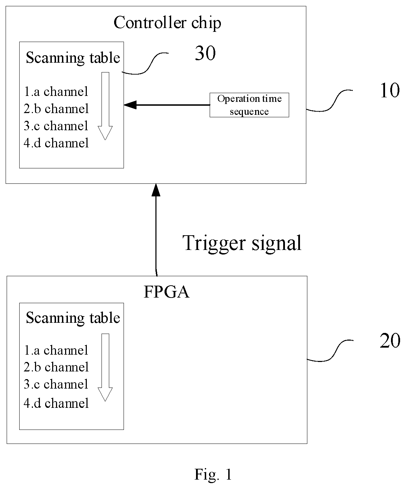

As shown in Fig. 1, currently in a controller chip 10 of a receiving end ("RX end") of a LiDAR, based on working needs of lasers, a sequence of operation steps are designed in advance (i.e., operation time sequences are well designed) and stored in the controller chip 10, and, the controller chip 10 has a built-in scanning table 30, in which multiple instructions are sequenced in the scanning table 30, and each instruction corresponds to selection of one channel. For example, the scanning table 30 includes sequentially arranged channel identifiers a, b, c, and d. A field programmable gate array ("FPGA") 20 and the controller chip 10 store the same scanning table 30, and the scanning table 30 includes multiple instructions (channel turning-on information). When the LiDAR works, the FPGA 20 transmits a trigger signal to the controller chip 10, the controller chip 10 executes a predetermined operation time sequence, and turns on a corresponding channel based on channel selection information in the scanning table 30. Next information in the scanning table 30 is executed when the controller chip 10 receives the trigger signal again, that is, a next channel is turned on for execution.

Different types of LiDAR have different implementation time needs for multiple operations or different implementation sequences for the multiple operations, to cause different types of LiDAR need customized chips to match them, and the controller chip of the receiving end can be not universal.

In technical solutions of this disclosure, because each instruction includes a first instruction portion indicating an operation object and a second instruction portion indicating operation steps, different detectors can be flexibly indicated to execute different operation steps by setting an instruction in an instruction table or setting time parameters of the instructions to achieve the flexibility in the detector control. Alternatively, selecting different target time parameters can also achieve the flexibility in the detector control, that is, the same chip can be configured with different operation time sequences to expand an application scope of the controller chip of the LiDAR.

Further, the trigger signal is from the at least one receiving port, the trigger signal from the same receiving port corresponds to the at least one sequencer, and initial instructions corresponding to different sequencers are in different positions in the instruction table. In the technical solutions of this disclosure, different detectors can be separately controlled by setting different sequencers to determine different target instructions, further achieving the flexibility in the detector control.

To make the above purposes, features and advantages of this disclosure more obvious and readily understood, specific embodiments of this disclosure are described below in detail with reference to the drawings.

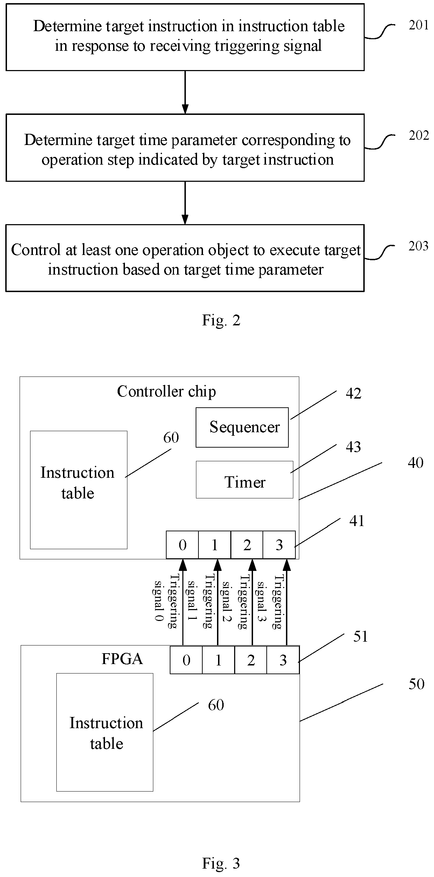

Fig. 2 shows a flowchart of a detector control method, provided in embodiments of this disclosure.

The detector control method in the embodiments of this disclosure can be used for a controller chip in the LiDAR, that is, each step of the method can be executed by the controller chip.

Specifically, the detector control method can include the following steps.

At S201, a target instruction in an instruction table is determined in response to receiving a trigger signal, where the instruction table includes multiple sequentially arranged instructions, each instruction includes a first instruction portion and a second instruction portion, the first instruction portion indicates at least one operation object, and the second instruction portion indicates multiple sequentially arranged operation steps.

At S202, a target time parameter corresponding to operation steps indicated by the target instruction is determined, where the target time parameter represents each time interval between the operation steps indicated by the target instruction.

At S203, at least one operation object is controlled to execute the target instruction based on the target time parameter, where the operation object includes a detector.

Each instruction in the instruction table in the embodiments of this disclosure includes the first instruction portion and the operation object indicated by the first instruction portion, and the second instruction portion and operation steps indicated by the second instruction portion. Table 1 is an example of an instruction in the embodiments of this disclosure.

**Table 1**

| Instruction | Operation of instruction |
|---|---|
| First instruction portion [3:0] | Detector identifier |
| Second instruction portion [5:4] | High voltage applying + bias voltage applying + turning-on of TOF channel + turning-off of TOF channel + bias voltage applying + high voltage removing |
| Second instruction portion [7:6] | High voltage applying + turning-on of ambient light measurement channel + turning-off of ambient light measurement channel + high voltage removing |

Specifically, compared to the instruction in the existing technique, the instruction in the embodiments of this disclosure has a wider bits width, for example, occupying more bits. As shown in Table 1, in one instruction, different bits represent different instruction portions, each instruction portion can indicate one operation, for example, indicating an identifier of a channel, or indicating a group of operations with fixed sequences and time, and an execution time of each step in the group of operations can be determined into multiple groups and is additionally coded and stored in the controller chip.

For a detector of a LiDAR, the sequence for implementing multiple operations of a same function is constant, for example, in the second instruction portion in Table 1, to implement calculation of TOF, actions of high voltage applying, bias voltage applying, turning-on of a TOF channel, turning-off of the TOF channel, bias voltage removing, and high voltage removing inevitably need to be performed, differences lie in that, time intervals among the steps of different types of LiDAR are different.

Specifically, in Table 1, at a first instruction portion [3:0], four bits are used to indicate an identifier of a detector, the first instruction portion [3:0] indicates which detector executes an operation of a second instruction portion, for example, 0000 represents a detector 1. At a second instruction portion [5:4], two bits are used to indicate a series of operations of high voltage applying, bias voltage applying, turning-on of a TOF channel, turning-off of the TOF channel, bias voltage removing, and high voltage removing that need to be performed, when the two bits are 00, it indicates that the series of operations are not executed, when the two bits are 01, a target time parameter (i.e., a time interval between each operation step) corresponding to the code is determined. The detector indicated by the first instruction portion [3:0] is controlled to execute a series of operations of high voltage applying, bias voltage applying, turning-on of the TOF channel, turning-off of the TOF channel, bias voltage removing, and high voltage removing based on the target time parameter. At the second instruction portion [7:6], two bits are used to indicate a series of operations of high voltage applying + turning-on of an ambient light measurement channel + turning-off of the ambient light measurement channel + high voltage removing that need to be performed, specifically, when the two bits are 00, the series of operations are not executed, when the two bits are 01, the target time parameter (i.e., the time interval between each operation step) corresponding to the code is determined. The detector indicated by the first instruction portion [3:0] is controlled to execute the series of operations of high voltage applying + turning-on of an ambient light measurement channel + turning-off of the ambient light measurement channel + high voltage removing based on the target time parameter.

Specific examples are made for the above content, when an instruction code is 00000100, the instruction is parsed as the detector 1 executing a TOF measurement operation (high voltage applying, bias voltage applying, turning-on of the TOF channel, turning-off of the TOF channel, bias voltage removing, and high voltage removing), the time interval of each step is a time parameter corresponding to a serial number 01 in TOF measurement time parameters, and an ambient light measurement operation (high voltage + turning-on of the ambient light measurement channel + turning-off of the ambient light measurement channel + high voltage removing) is not executed. It should be noted that a bit width of the instruction can be determined based on needs, for example, the number of bits of the first instruction portion and the number of bits of the second instruction portion in Table 1 can both be decreased or increased, and multiple bits can also be increased to indicate other operation steps after the second instruction portion [7:6]. Furthermore, the content and instruction sequence of each instruction in the instruction table can be autonomously determined based on an actual application scenario, and the execution time of each step stored in the controller chip can be determined into multiple groups and can also be autonomously determined.

In the embodiments of this disclosure, different operation time sequences can be realized through settings of the instruction table and the execution time, that is, the same controller chip can be adapted to different types of LiDAR. Furthermore, one trigger signal in the embodiments of this disclosure can indicate execution of one group of operation time sequences, and the operation time sequence is flexibly changed without excessively increasing storage content of the chip and the number of the trigger signals that need to be received.

In one non-limiting embodiment of this disclosure, the first instruction portion includes a first instruction subportion and a second instruction subportion, the first instruction subportion indicates an identifier of a detector group, and the second instruction subportion indicates an identifier of a detector. In the embodiments of this disclosure, the instruction is more complicated by increasing the number of bits of the instruction, to cause the instruction indicates more content, further improving the flexibility in the detector control.

Specifically, as shown in Table 2, multiple detectors are divided into multiple groups, for example, 64 detectors are divided into 4 groups (i.e., bank0, bank1, bank2, and bank3), each group includes 8 detectors, and detectors of each group are all numbered 0-7. Each bit of the first instruction subportion indicates one detector group, and the second instruction subportion indicates the number of the detectors in the detector groups. For example, when the instruction code is 000100100100, the instruction is parsed into the detector group of bank0, the detector numbered 3 executes the TOF measurement operation (high voltage applying, bias voltage applying, turning-on of the TOF channel, turning-off of the TOF channel, bias voltage removing, and high voltage removing), the time interval of each step is the time parameter corresponding to the serial number 01 in the TOF measurement time parameters, and the ambient light measurement operation (high voltage + turning-on of the ambient light measurement channel + turning-off of the ambient light measurement channel + high voltage removing) is not executed.

Further, the first instruction subportion at least indicates one detector group, for example, when the instruction code is 001100100100, the instruction is paraded into the detector groups of bank0 and bank1, the NO. 4 detector executes the TOF measurement operation (high voltage applying, bias voltage applying, turning-on of the TOF channel, turning-off of the TOF channel, bias voltage removing, and high voltage removing), the time interval of each step is the time parameter corresponding to the serial number 01 in the TOF measurement time parameters, and the ambient light measurement operation (high voltage + turning-on of the ambient light measurement channel + turning-off of the ambient light measurement channel + high voltage removing) is not executed. Because the first instruction subportion can indicate the identifiers of more detector groups, it is possible to select channels for multiple different detector groups in parallel.

**Table 2**

| Instruction | Operation of instruction |
|---|---|
| First instruction subportion [3:0] | Identifier of detector group |
| Second instruction subportion [7:4] | Detector identifier |
| Second instruction portion [9:8] | High voltage applying + bias voltage applying + turning-on of TOF channel + turning-off of TOF channel + bias voltage removing + high voltage removing |
| Second instruction portion [11:10] | High voltage applying + turning-on of ambient light measurement channel + turning-off of ambient light measurement channel + high voltage removing |

Further, the first instruction portion is further widened, different bits are used to represent different detector groups, and codes thereof represent serial numbers for detectors in the detector groups, that is, one channel selection is configured for each detector group (bank) in the instruction, and the first instruction subportion can indicate the identifiers of the multiple detector groups, to cause different channels can be selected for different detector groups to flexibly control each detector group. Specifically, with reference to Table 3, 0 to 3 bits in the instruction represent bank0, and specific codes at these positions represent channel numbers in bank0; 4 to 7 bits in the instruction represent bank1, and specific codes at these positions represent channel numbers in bank1; 8 to 11 bits in the instruction represent bank2, and specific codes at these positions represent channel numbers in bank2; 12 to 15 bits in the instruction represent bank3, and specific codes at these positions represent channel numbers in bank3. In the instruction, 16 to 19 bits are the second instruction portion, where the 16 to 17 bits represent execution of the TOF measurement operation (high voltage applying, bias voltage applying, turning-on of the TOF channel, turning-off of the TOF channel, bias voltage removing, and high voltage removing), and specific codes at these positions represent time parameters (time intervals among the steps) of the TOF measurement operation; and 18 to 19 bits represent execution of the ambient light measurement operation (high voltage applying + turning-on of the ambient light measurement channel + turning-off of the ambient light measurement channel + high voltage removing), and specific codes at these positions represent time parameters (time intervals among the steps) of the ambient light measurement operation. For example, when the instruction code is 00000001001000110100, the instruction is parsed into the NO. 1 detector of bank0, the NO. 2 detector of bank1, the NO. 3 detector of bank2, and the NO. 4 detector of bank3 to execute the TOF measurement operation (high voltage applying, bias voltage applying, turning-on of the TOF channel, turning-off of the TOF channel, bias voltage applying, and high voltage removing), the time interval of each step is the time parameter corresponding to the serial number 01 in the TOF measurement time parameters, and the ambient light measurement operation (high voltage + turning-on of the ambient light measurement channel + turning-off of the ambient light measurement channel + high voltage removing) is not executed.

**Table 3**

| Instruction | Operation of instruction |
|---|---|
| First instruction subportion 1 [3:0] | Second instruction subportion-channel identifier of Bank0 |
| First instruction subportion 2 [7:4] | Second instruction subportion-channel identifier of Bank1 |
| First instruction subportion 3 [11:8] | Second instruction subportion-channel identifier of Bank2 |
| First instruction subportion 4 [15:12] | Second instruction subportion-channel identifier of Bank3 |
| Second instruction portion [17:16] | High voltage applying + bias voltage applying + turning-on of TOF channel + turning-off of TOF channel + bias voltage applying + high voltage removing |
| Second instruction portion [19:18] | High voltage applying + turning-on of ambient light measurement channel + turning-off of ambient light measurement channel + high voltage removing |

Further, there is at least one first instruction portion, and each first instruction portion indicates one operation object. Accordingly, the number of second instruction portion is at least one, there is a correspondence relationship between the at least one first instruction portion and the at least one second instruction portion, and each second instruction portion indicates multiple sequentially arranged operation steps. Specifically, each first instruction portion indicates detector identifiers of one detector group, and each detector identifier can be the same or different.

Specifically, as shown in Table 4, same or different operation time sequences are configured for each detector group in one instruction, to cause different detector groups can select same or different channels and have different operation time sequences through one trigger signal.

Specifically, with reference to Table 4, 0 to 3 bits in the instruction are a first instruction portion 1, representing bank0, and specific codes at these positions represent channel numbers in bank0. 4 to 5 bits in the instruction are a second instruction portion 1-1, representing execution of the TOF measurement operation (high voltage applying, bias voltage applying, turning-on of the TOF channel, turning-off of the TOF channel, bias voltage applying, and high voltage removing), and specific codes at these positions represent time parameters (time intervals among the steps) of the TOF measurement operation. 6 to 7 bits are a second instruction portion 1-2, representing execution of the ambient light measurement operation (high voltage applying + turning-on of the ambient light measurement channel + turning-off of the ambient light measurement channel + high voltage removing), and specific codes at these positions represent time parameters (time intervals among the steps) of the ambient light measurement operation. Different time sequences are configured for bank0 through the first instruction portion 1, the second instruction portion 1-1, and the second instruction portion 1-2.

Accordingly, different operation time sequences are configured for bank1 through a first instruction portion 2, a second instruction portion 2-1, and a second instruction portion 2-2. Different operation time sequences are configured for bank2 through a first instruction portion 3, a second instruction portion 3-1, and a second instruction portion 3-2. Different operation time sequences are configured for bank3 through a first instruction portion 4, a second instruction portion 4-1, and a second instruction portion 4-2, or the like.

**Table 4**

| Instruction | Operation of instruction |
|---|---|
| First instruction subportion 1 [3:0] | Second instruction subportion-channel identifier of Bank0 |
| Second instruction portion 1-1 [5:4] | High voltage applying + bias voltage applying + turning-on of TOF channel + turning-off of TOF channel + bias voltage applying + high voltage removing |
| Second instruction portion 1-2 [7:6] | High voltage applying + turning-on of ambient light measurement channel + turning-off of ambient light measurement channel + high voltage removing |
| First instruction subportion 2 [11:8] | Second instruction subportion-channel identifier of Bank1 |
| Second instruction portion 2-1 [13:12] | High voltage applying + bias voltage applying + turning-on of TOF channel + turning-off of TOF channel + bias voltage applying + high voltage removing |
| Second instruction portion 2-2 [15:14] | High voltage applying + turning-on of ambient light measurement channel + |
| | turning-off of ambient light determination channel + high voltage removing |
| First instruction subportion 3 [19:16] | Second instruction subportion-channel identifier of Bank2 |
| Second instruction portion 3-1 [21:20] | High voltage applying + bias voltage applying + turning-on of TOF channel + turning-off of TOF channel + bias voltage applying + high voltage removing |
| Second instruction portion 3-2 [23:22] | High voltage applying + turning-on of ambient light measurement channel + turning-off of ambient light determination channel + high voltage removing |
| First instruction subportion 4 [27:24] | Second instruction subportion-channel identifier of Bank3 |
| Second instruction portion 4-1 [29:28] | High voltage applying + bias voltage applying + turning-on of TOF channel + turning-off of TOF channel + bias voltage applying + high voltage removing |
| Second instruction portion 4-2 [31:30] | High voltage applying + turning-on of ambient light measurement channel + turning-off of ambient light measurement channel + high voltage removing |

With reference to Fig. 2 and Fig. 3, a controller chip 40 includes at least one sequencer 42, where the sequencer 42 points to a position of a certain instruction in an instruction table 60. During specific implementation of the step S201, an instruction indicated by the sequencer 42 at a current position in the instruction table 60 is determined as a target instruction.

Specifically, each sequencer 42 indicates one instruction position in the instruction table 60. After receiving the trigger signal, the controller chip 40 determines, as the target instruction, the instruction indicated by each sequencer 42 at the current position in the instruction table 60. That is to say, if there are multiple sequencers 42, the controller chip 40 can determine multiple target instructions after receiving the trigger signal.

Further, each sequencer has an initial instruction in the instruction table 60, and the initial instructions corresponding to different sequencers 42 are at different positions in the instruction table 60. That is to say, when the controller chip 40 includes multiple sequencers 42, different sequencers 42 can correspond to different initial instructions, to cause different detectors can be controlled to execute different operation time sequences in parallel.

Specifically, each sequencer 42 has its own base register, and the base register indicates a position of the first one among the instructions of the sequencer 42 in the instruction table 60. When the controller chip 40 receives the trigger signal, the sequencer 42 takes the target instruction from the instruction table 60, analyzes the target instruction, and generates the operation time sequence.

In a non-limiting embodiment, before the step S201, the controller chip 40 can further execute the following steps: determining whether a reset signal is received; and when the reset signal is received, controlling the instruction indicated by the sequencer 42 in the instruction table 60 to be an initial instruction, where the initial instruction is one instruction in the instruction table 60.

In this embodiment, the sequencer 42 can be controlled to reset through the reset signal. Resetting the sequencer 42 means that the instruction indicated by the sequencer 42 in the instruction table 60 is controlled to be the initial instruction.

In a non-limiting embodiment, after the step S203, the controller chip 40 can further execute the following step: controlling the instruction indicated by the sequencer 42 in the instruction table 60 to be a next instruction of the target instruction.

In this embodiment, after the controller chip 40 controls the detector to execute the target instruction, the controller chip 40 controls the sequencer 42 to indicate the next instruction of the target instruction in the instruction table 60. In other words, the sequencer 42 indicates the instructions in sequence in the instruction table.

In one specific application scenario, for four detector groups, each detector group includes eight channels and corresponds to one sequencer 42. When the LiDAR works, all lasers need to emit light once at each angle, and the detectors corresponding to the lasers need to be turned on to receive the light emitted by the corresponding lasers. For example, in horizontal 0°, eight instructions in the instruction table 60 are executed in sequence, that is, eight detectors corresponding to each detector group all work once, and rotate to a next horizontal angle. The controller chip 40 receives one reset signal, and the sequencer 42 recovers to a position of an initial instruction in the instruction table 60, and then executes a round of the foregoing operations. That is to say, the position of the initial instruction of the sequencer 42 is determined based on working needs of the LiDAR and the instruction sequence of the instruction table 60, the initial instruction and the next instructions are executed in a loop.

It is to be noted that serial numbers of the steps in the embodiments do not represent limitations to the execution sequences of the steps.

It can be understood that in specific implementation, the detector control method can be implemented by means of a software program, which runs in a chip or a processor integrated inside a chip module. The method can also be implemented in a combined manner of software and hardware, which is not limited in this disclosure.

Still with reference to Fig. 3, the controller chip 40 can include multiple receiving ports 41, which are shown as an identifier 0, an identifier 1, an identifier 2, and an identifier 3 in Fig. 3. Each receiving port 41 is configured to receive the trigger signal. Accordingly, an FPGA 50 can include multiple transmission ports 51, which are shown as an identifier 0, an identifier 1, an identifier 2, and an identifier 3 in Fig. 3, and each transmission port 51 is configured to transmit the trigger signal. There is a correspondence relationship between the transmission port 51 and the receiving port 41.

The trigger signal received by the controller chip 40 is from at least one receiving port 41, where the trigger signal from the same receiving port corresponds to at least one sequencer 42. That is to say, with reference to Fig. 3, the controller chip can merely enable one receiving port 41 (e.g., the identifier 0), or can enable multiple receiving ports (e.g., the identifier 0 and the identifier 1.)

Further, in response to the received trigger signals from different receiving ports 41, multiple target instructions are respectively determined based on the instruction indicated by the sequencer 42 corresponding to the trigger signal of each receiving port 41 in the instruction table 60. That is to say, when multiple receiving ports are enabled, the trigger signals from the same receiving port correspond to one or more sequencers, for example, the receiving port 41 with the identifier being 0 corresponds to a sequencer 0, and the trigger signal from the port instructs the sequencer 0 to analyze the corresponding instruction in the instruction table; and the receiving port 41 with the identifier being 1 corresponds to a sequencer 1, and the trigger signal from the port instructs the sequencer 1 to analyze the corresponding instruction in the instruction table.

The FPGA 50 can transmit multiple trigger signals through multiple transmission ports 51, accordingly, the controller chip 40 can receive the trigger signals from the multiple receiving ports 41, and the trigger signals from the same receiving port 41 correspond to at least one sequencer 42. That is to say, the controller chip 40 determines the target instruction based on the trigger signal corresponding to each sequencer 42 as a triggering source.

Further, the controller chip 40, in response to the received trigger signals from different receiving ports 41, respectively determines multiple target instructions based on the instruction indicated by the sequencer 42 corresponding to the trigger signal of each receiving port 41 in the instruction table.

Still with reference to Fig. 3 , the controller chip 40 can include at least one timer. A timer 43 can include multiple sets of time parameters. Each time parameter specifically is a time interval between every two operations in one group of instruction operations. The timer 43 determines one set of time parameters as target time parameters based on the target instruction in the instruction table 60.

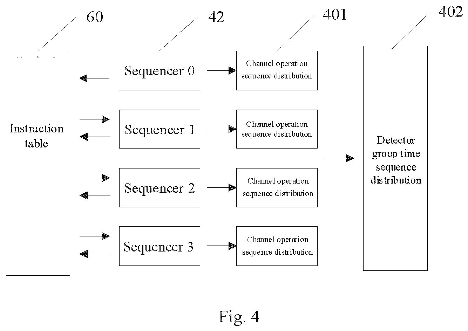

With reference to Fig. 3 and Fig. 4, in one specific application scenario of this disclosure, the controller chip 40 includes one instruction table 60, four sequencers 42 (sequencer 0, sequencer 1, sequencer 2, and sequencer 3 shown in Fig. 4), at least one receiving port 41, and at least one timer 43. The instruction table 60 includes multiple instructions, and each instruction includes an operation object and one group of operation time sequences.

The controller chip 40 receives the trigger signal from the FPGA 50. The sequencer 42 decodes instruction information in the instruction table 60 to generate the operation time sequence. At step 401 and step 402, the controller chip 40 respectively distributes the operation time sequence to the corresponding channel and detector group based on channel information and detector group information in the target instruction. The controller chip 40 sequentially executes one instruction (i.e., one group of operation time sequences) every time receiving the trigger signal based on the sequence in the instruction table 60.

It can be understood that channel time sequence distribution can be performed first, and then detector group time sequence distribution is performed, or the detector group time sequence distribution can be performed first, and then the channel time sequence distribution is performed, and the embodiments of this disclosure are not limited thereto.

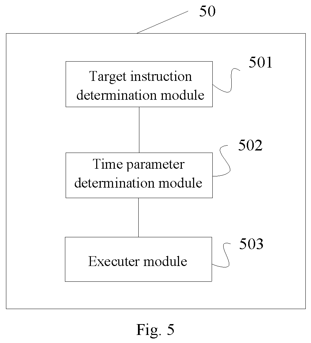

With reference to Fig. 5, embodiments of this disclosure further disclose a detector controller apparatus 50. The detector controller apparatus 50 can include:
a target instruction determination module 501 configured to determine a target instruction in an instruction table in response to receiving a trigger signal, where the instruction table includes multiple sequentially arranged instructions, each instruction includes a first instruction portion and a second instruction portion, the first instruction portion indicates at least one operation object, and the second instruction portion indicates multiple sequentially arranged operation steps;
a time parameter determination module 502 configured to determine a target time parameter corresponding to operation steps indicated by the target instruction, where the target time parameter represents each time interval between the operation steps indicated by the target instruction; and
an executer module 503 configured to control at least one operation object to execute the target instruction based on the target time parameter, where the operation object includes a detector.

In a specific embodiment, the target instruction determination module 501 can include at least one sequencer, and an initial instruction of each sequencer is in a different position in the instruction table.

Further, the target instruction determination module 501 can include at least one receiving port, the receiving port receives the trigger signal, and the trigger signal from the same receiving port corresponds to at least one sequencer.

Further, the target instruction determination module 501 can include at least one timer configured to determine a target time parameter corresponding to operation steps indicated by the target instruction, where the different timers store the different target time parameters.

More content for a working principle and a working mode of the detector controller apparatus 50 can be called description of related embodiments in Fig. 2 to Fig. 4, and are not described herein again.

In specific implementation, the detector controller apparatus 50 can correspond to a chip having a detector control function in the LiDAR, such as a system-on-a-chip ("SOC"), a baseband chip, or the like; or correspond to a chip module having a detector control function in the LiDAR; or correspond to a chip module having a chip with a data processing function, or correspond to the LiDAR.

Modules/units included in apparatuses and products described in the above embodiments can be software modules/units, can be hardware modules/units, or can also be partially software modules/units and partially hardware modules/units. For example, for the apparatuses and products applied to or integrated into a chip, the modules/units included therein can be implemented by means of hardware such as circuits, or at least some of the modules/units can be implemented by means of a software program, the software program runs in a processor integrated inside the chip, and the remaining modules/units (if any) can be implemented by means of hardware such as circuits; for the apparatuses and products applied to or integrated into a chip module, the modules/units included therein can be implemented by means of hardware such as circuits, different modules/units can be located in a same component (e.g., a chip, a circuit module, or the like) or different components of the chip module, or at least some of the modules/units can be implemented by means of a software program, the software program runs in a processor integrated inside the chip module, and the remaining modules/units (if any) can be implemented by means of hardware such as circuits; and for the apparatuses and products applied to or integrated into a terminal, the modules/units included therein can be implemented by means of hardware such as circuits, different modules/units can be located in a same component (e.g., a chip, a circuit module, or the like) or different components of the terminal, or at least some of the modules/units can be implemented by means of a software program, the software program runs in a processor integrated inside the terminal, and the remaining modules/units (if any) can be implemented by means of hardware such as circuits.

Embodiments of this disclosure further disclose a storage medium. The storage medium is a computer-readable storage medium, having a computer program stored thereon, where when the computer program is run, steps of the above detector control method can be executed.

Embodiments of this disclosure further disclose a LiDAR. The LiDAR can include a memory and a processor, where the memory stores a computer program that can be run on the processor. When the processor is running the computer program, steps of the above detector control method are executed.

It should be understood that the term "and/or" in this disclosure is merely an association relationship describing related objects, which means that there can be three relationships, for example, A and/or B can represent three situations: A exists alone, A and B exist at the same time, and B exists alone. In addition, the character "/" in this disclosure represents that the related objects are in an "or" relationship.

"Multiple" described in the embodiments of this disclosure means two or more.

The "first," "second," or the like described in the embodiments of this disclosure are merely for the purpose of illustrating and distinguishing objects described, and are not in any order, nor do they represent any special limitation on the number of devices in the embodiments of this disclosure, and cannot constitute any limitation on the embodiments of this disclosure.

The "connection" in the embodiments of this disclosure includes various connection modes, such as direct connection and indirect connection, to realize a communication between devices, and the embodiments of this disclosure do not make any limitation.

It should be understood that in the embodiments of this disclosure, the processor can be a central processing unit ("CPU"). The processor can also be another general-purpose processor, a digital signal processor ("DSP"), an application specific integrated circuit ("ASIC"), a field programmable gate array ("FPGA"), or other programmable logic device, a discrete gate or a transistor logic device, discrete hardware components, or the like. The general-purpose processor can be a microprocessor or the processor can also be any conventional processor, or the like.

It should also be understood that the memory in the embodiments of this disclosure can be a volatile memory or a non-volatile memory, or can include both the volatile memory and the non-volatile memory. Among them, the non-volatile memory can be a read-only memory ("ROM"), a programmable ROM ("PROM"), an erasable PROM ("EPROM"), an electrically EPROM ("EEPROM"), or a flash memory. The volatile memory can be a random access memory ("RAM"), which is used as an external cache. By way of illustrative, but not limiting description, many forms of random access memories ("RAM") are available, such as a static RAM ("SRAM"), a dynamic random-access memory ("DRAM"), a synchronous DRAM ("SDRAM"), a double data rate SDRAM ("DDR SDRAM"), an enhanced SDRAM ("ESDRAM"), a synch link DRAM ("SLDRAM"), and a direct rambus RAM ("DR RAM".)

The above embodiments can be fully or partially implemented by software, hardware, firmware, or any other combinations. When the software is used for implementation, the above embodiments can be fully or partially implemented in the form of a computer program product. The computer program product includes one or more computer instructions or computer programs. When the computer instruction or computer program is loaded or executed on a computer, processes or functions based on the embodiments of this disclosure are fully or partially generated. The computer can be a general computer, a special computer, a computer network, or other programmable apparatus. The computer instruction can be stored in a computer-readable storage medium or transmitted from one computer-readable storage medium to another computer-readable storage medium. For example, the computer instruction can be transmitted from a website site, computer, server, or data center to another website site, computer, server, or data center in a wired or wireless manner. The computer-readable storage medium can be any available medium that can be accessed by a computer, or a data storage device such as a server or data center that includes one or more available mediums integrated.

It should be understood that in various embodiments of this disclosure, sequence numbers of the above processes do not indicate an execution sequence, and an execution sequence of the processes shall be determined by functionalities and intrinsic logics thereof, and shall form no limitation on an implementation process of the embodiments of this disclosure.

In several embodiments provided in this disclosure, it should be understood that the disclosed method, apparatus, and system can be implemented in other manners. For example, an apparatus embodiment described above is merely schematic; for example, division of the units is merely logic function division, and other division manners can be adopted during practical implementation; and for example, multiple units or components can be combined or integrated into another system, or some characteristics can be neglected or not executed. In addition, the displayed or discussed mutual coupling or direct coupling or communication connection can be indirect coupling or communication connection through some interfaces, devices, or units, and can be in electrical, mechanical, or other forms.

The units described as separate components can or can not be physically separated. The components displayed as units can or can not be physical units, that is, the components can be located in one place, or can also be arranged on multiple network units. Some or all of the units can be selected based on actual needs to achieve the purposes of the solutions of these embodiments.

In addition, the functional units in the various embodiments of this disclosure can be integrated into one processing unit, or each unit can exist alone physically, or two or more units can be integrated into one unit. The above integrated unit can be implemented in a hardware form, or can also be implemented in the form of hardware and software functional units.

The integrated unit implemented in the form of a software functional unit described above can be stored in a computer-readable storage medium. The software functional unit is stored in a storage medium, and includes multiple instructions configured to cause a computer device (which can be a personal computer, a server, a network device, or the like) to execute some of the steps of the method described in various embodiments of this disclosure.

Although this disclosure is disclosed as above, this disclosure is not limited thereto. Any person skilled in the art can make various changes and modifications without departing from the spirit and scope of this disclosure. Therefore, the protection scope of this disclosure should be subject to the scope defined by the claims.

## Claims

1. A detector control method, comprising:
determining a target instruction in an instruction table in response to receiving a trigger signal, wherein the instruction table comprises a plurality of sequentially arranged instructions, each instruction comprises a first instruction portion and a second instruction portion, the first instruction portion indicates at least one operation object, and the second instruction portion indicates a plurality of sequentially arranged operation steps;
determining a target time parameter corresponding to operation steps indicated by the target instruction, wherein the target time parameter represents each time interval between the operation steps indicated by the target instruction; and
controlling at least one operation object to execute the target instruction based on the target time parameter, wherein the operation object includes a detector.

2. The detector control method of claim 1, wherein the first instruction portion comprises a first instruction subportion and a second instruction subportion, the first instruction subportion indicates an identifier of a detector group, and the second instruction subportion indicates an identifier of the detector.

3. The detector control method of claim 2, wherein the first instruction subportion indicates an identifier of at least one detector group.

4. The detector control method of claim 1, wherein the number of the first instruction portion is at least one, and each of the first instruction portion indicates one operation object.

5. The detector control method of claim 4, wherein the number of the second instruction portion is at least one, and a correspondence relationship existing between the at least one first instruction portion and the at least one second instruction portion, and each second instruction portion indicates a plurality of sequentially arranged operation steps.

6. The detector control method of claim 1, wherein the determining a target instruction in an instruction table in response to receiving a trigger signal comprises:
determining, as the target instruction, an instruction indicated by a sequencer at a current position in the instruction table.

7. The detector control method of claim 6, wherein after the controlling the at least one operation object to execute the target instruction based on the target time parameter, the detector control method further comprises:
controlling the instruction indicated by the sequencer in the instruction table to be a next instruction of the target instruction.

8. The detector control method of claim 6, wherein before the determining the target instruction in the instruction table, the detector control method further comprises:
determining whether a reset signal is received; and
controlling the instruction indicated by the sequencer in the instruction table to be an initial instruction when the reset signal is received, wherein the initial instruction is a certain instruction in the instruction table.

9. The detector control method of claim 6, wherein the number of the sequencer is at least one, and initial instructions corresponding to the different sequencers are in different positions in the instruction table.

10. The detector control method of claim 9, wherein the trigger signal is from at least one receiving port, and the trigger signal from the same receiving port corresponds to at least one of the sequencer.

11. The detector control method of claim 10, wherein the determining a target instruction in an instruction table in response to receiving the trigger signal comprises:
in response to the received trigger signals from the different receiving ports, respectively determining a plurality of target instructions based on the instruction indicated by the sequencer corresponding to the trigger signal of each of the receiving port in the instruction table.

12. A detector controller apparatus, comprising:
a target instruction determination module, configured to determine a target instruction in an instruction table in response to receiving a trigger signal, wherein the instruction table comprises a plurality of sequentially arranged instructions, each instruction comprises a first instruction portion and a second instruction portion, the first instruction portion indicates at least one operation object, and the second instruction portion indicates a plurality of sequentially arranged operation steps;
a time parameter determination module, configured to determine a target time parameter corresponding to operation steps indicated by the target instruction, wherein the target time parameter represents each time interval between the operation steps indicated by the target instruction; and
an executer module, configured to control at least one operation object to execute the target instruction based on the target time parameter, wherein the operation object includes a detector.

13. The detector controller apparatus of claim 12, wherein the target instruction determination module comprises:
at least one sequencer, wherein an initial instruction of each sequencer is in a different position in the instruction table.

14. The detector controller apparatus of claim 12, wherein the target instruction determination module comprises:
at least one receiving port, wherein the receiving port receives the trigger signal, and the trigger signal from the same receiving port corresponds to at least one of the sequencer.

15. The detector controller apparatus of claim 12, wherein the time parameter determination module comprises:
at least one timer, configured to determine a target time parameter corresponding to operation steps indicated by the target instruction, wherein the different timers store the different target time parameters.

16. A computer-readable storage medium, having a computer program stored thereon, wherein when the computer program is run by a processor, executes steps of the detector control method of any of claims 1 to 11.

17. A LiDAR, comprising a memory and a processor, wherein the memory stores a computer program that can be run on the processor, and when the processor is running the computer program, executes steps of the detector control method of any of claims 1 to 11.
